# EUROPEAN PATENT APPLICATION

(11) **EP 2 043 344 A2**
(43) Date of publication of application: **01.04.2009**
(21) Application number: 08164534.3
(22) Date of filing: 17.09.2008
(51) Int. Cl.: H04M 3/51, H04M 7/12

(54) **Method and apparatus for decentralizing operator workstations of telephone exchanges by means of IP networks**

(30) Priority: 27.09.2007 IT MI20071859
(71) Applicant: Phonetica S.R.L., 20095 Cusano Milanino (prov. of Milano) (IT)
(72) Inventor: Durante, Marco, 20020, ARESE MI (IT); Durante, Giuseppe, 20157, MILANO (IT)
(74) Representative: Modiano, Micaela Nadia

(57) **Abstract**

A system for remote management of the operator workstation of a conventional or IP local telephone exchange (20) connected to an external network (1) that provides telephone services and to an internal extension (2), comprising a local control device (30) provided with means (31) for receiving a telephone call that originates from the external network (1) and is directed to the local exchange (20), for forwarding the call to a remote control device (60), with means (32) for receiving commands sent by the remote control device (60) and with means (33) for sending the commands to the local exchange (20); and a remote control device (60), provided with means (61) for receiving and forwarding the call to a remote exchange (50), with means (62) for receiving from the remote exchange (50) commands issued by means of tones, and with means (64) for forwarding the commands to the local control device (30), the local control device (30) and the remote control device (60) being provided with means (39, 69) for mutual communication over a public or private IP network (5).

## Description

The present invention relates to a method and a system for remote handling of telephone calls directed to a local exchange in order to allow to perform remotely, by utilizing data communications networks that operate with the IP protocol, all the ordinary activities normally performed by an operator of the local telephone exchange.

Since a number of years, it became indispensable to provide every office and every medium and large company with telephone exchanges capable of handling and sorting incoming calls. In practice every office and every company of a non-individual type in fact is equipped with an internal telephone network, to which several telephone sets, arranged in the different rooms of the company building, are connected. A number, usually with three digits and referenced as "extension", corresponds to each of these telephone sets and identifies the individual telephone set. Incoming calls to the company or office are handled by an operator located at the exchange operator station, who has the task of answering the incoming calls, talking to the caller and, if necessary, sorting the call to the desired extension.

Typically, the exchange that receives every call directed to the company number is a PABX (private automatic branch exchange) device, to which a telephone used by the exchange operator is connected. When a call arrives, the operator lifts the handset and talks to the caller; once aware of the person with whom the caller wishes to communicate, the operator dials the digits that correspond to the desired extension, optionally preceded or followed by the pressing of control buttons, and as soon as the recipient of the call has been reached releases his own line, diverting the call to the corresponding internal line.

Over time, and as many companies seek inexpensive and commercial methods aimed at higher organizational efficiency and cost reduction, the above described telephone handling method has been found to be no longer able to fully meet the requirements of companies.

This method in fact suffers some considerable disadvantages. In particular, each operator workstation requires the presence of an operator, who works on a telephone set that is directly connected to the telephone exchange, thus forcing the company to reserve space within its own offices to manage incoming calls. Moreover, the absence of an operator outside of certain times often restricts the possibility to receive calls only during the period of time that corresponds to office hours. Not least, since the exchange is located inside the office, it is awkward or even embarrassing to use a single operator workstation if it is necessary to manage a plurality of companies or offices from a single workstation, as occurs increasingly often.

One solution to the problem is disclosed in EP 1283635 B1, by the same Applicant, which in fact already allows to perform from a remote workstation almost all the functions normally performed by the local exchange operator of an office or company. However, the solution disclosed in EP 1283635 B1 works on telephone exchanges connected to networks of the traditional type, such as analog networks or digital networks of the ISDN type, and uses this type of networks also to perform and control internally the operations for decentralization and delocalization of the local exchange.

Though being effective, this solution suffers some limitations in terms of versatility with respect to new technologies. In particular, so-called VoIP or "Voice over IP" (voice over Internet protocol) technology is becoming increasingly widespread and allows to make a telephone call by utilizing an Internet connection or another dedicated network that uses the IP protocol, instead of going through the traditional telephone network (PSTN). This allows to reduce costs significantly, to eliminate the corresponding switching exchanges and save on occupied bandwidth. Data packets containing voice information, coded in digital form, are in fact routed on the network only when this is necessary, i.e., when one of the connected users is talking.

The aim of the present invention is to overcome the limitations of the current methods and systems, by providing a method and a system that allow to perform from a remote workstation almost all the functions normally performed by the local exchange operator of an office or company, utilizing the benefits of new telecommunications technologies, particularly of IP technology.

Within this aim, an object of the present invention is to be able to perform and control internally the operations for decentralizing and delocalizing the local exchange by using an IP network between the local control device and the remote control device.

Another object of the present invention in overcoming the limitations of current systems is to be able to answer from a remote location, from a conventional telephone and in a manner that is fully transparent to the caller, to a call directed to the company exchange, greet the caller as the local company operator would do, put on hold, resume and transfer the incoming call even when the local exchange is a PABX of the IP (Internet Protocol) type.

Another object of the present invention is to allow the management of a plurality of telephone exchanges, even of different companies that do not belong to the same group, from a single remote workstation.

This aim and these and other objects, which will become better apparent hereinafter, are achieved by a system for remote management of the operator workstation of an IP or conventional local telephone exchange connected to an external network that provides telephone services and to an internal extension, comprising a local control device provided with: means for receiving a telephone call that originates from the external network and is directed to the local exchange, means for forwarding the call to a remote control device, means for receiving commands sent by the remote control device, and means for sending the commands to the local exchange; and a remote control device, provided with: means for receiving and forwarding the call to a remote exchange, means for receiving from the remote exchange commands issued by means of tones, and means for forwarding said commands to the local control device, the local control device and the remote control device being provided with means for mutual communication over an IP network.

The intended aim and objects are also achieved by a method for remote management of the operator workstation of a conventional or IP local telephone exchange connected to an external network that provides telephone services and to an internal extension, comprising the steps of: forwarding a telephone call received by the local exchange on the external network to a local control device; on the part of the local control device, forwarding the call to a remote control device; on the part of the remote control device, forwarding the call to a remote exchange; on the part of a telephone set connected to the remote exchange, answering the call; on the part of the telephone set, generating commands by means of tones; on the part of the remote control device, forwarding said commands to the local control device; on the part of the local control device, forwarding the commands to the local telephone exchange, the communication between the local control device and the remote control device occurring over an IP network.

Advantageously, the system can be driven according to commercial standard or proprietary protocols and comprises means, constituted substantially by suitably programmed hardware and software devices, for driving traditional hardware means, placing the caller on hold, parking the call, selecting a telephone number, accessing the external network, resuming a held or parked call, releasing the first and/or second telephone call.

In particular, the system can be associated with any exchange in order to provide the coupling of an external network with an internal extension, independently of the equipment used, thus overcoming the limitations already described in the use of dedicated networks of telephone exchanges or in a connection of the VPN type.

Further characteristics and advantages of the present invention will become better apparent from the following detailed description, given by way of non-limiting example and illustrated in the accompanying figures, wherein:
Figure 1 is a schematic view of the architecture of a telephone system that operates according to the present invention;
Figure 2 is a block diagram that illustrates in greater detail the combination of devices that constitutes the system according to the present invention;
Figure 3 is a schematic view of two variations of a local control device according to the present invention;
Figure 4 is a schematic view of two variations of a remote control device according to the present invention.

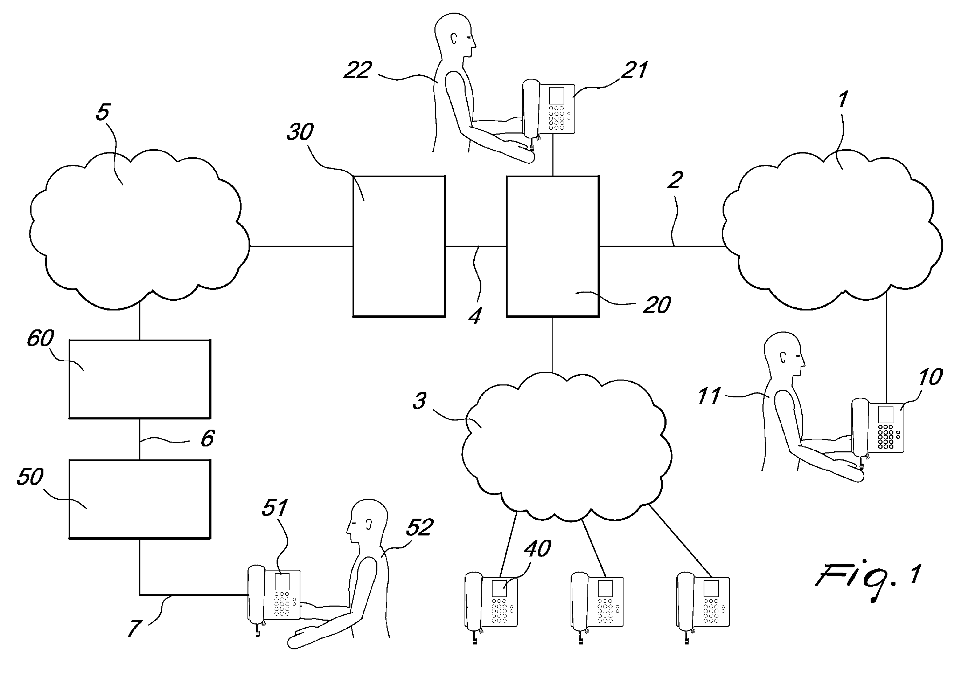

With reference to Figure 1, the architecture of the complete system provides for the use of a network 1 that provides telephone services, for example a classic PSTN (Public Switched Telephone Network) network, provided by an authorized telephone company, or a public IP network/Internet or a private IP network, lines 2 in input to a local exchange 20, which in particular is located at, or corresponds to, an office or a company, a set of lines 3 within the company, which are used to connect in a traditional manner the exchange 20 to extension telephone sets 40, each of which corresponds to a given extension, a connection 4 that connects the exchange 20 to a local control device 30, an IP network 5 that connects the local control device 30 to a remote control device 60, a connection 6 that connects the remote control device 60 to a remote exchange 50, hereinafter generically referenced as call center and manned by one or more operators 52 that operate on telephone sets 51.

Figure 1 also illustrates a caller 11, who operates a telephone set 10, and an exchange operator 22, who works in a traditional manner on an optional telephone set 21 connected to the local exchange 20.

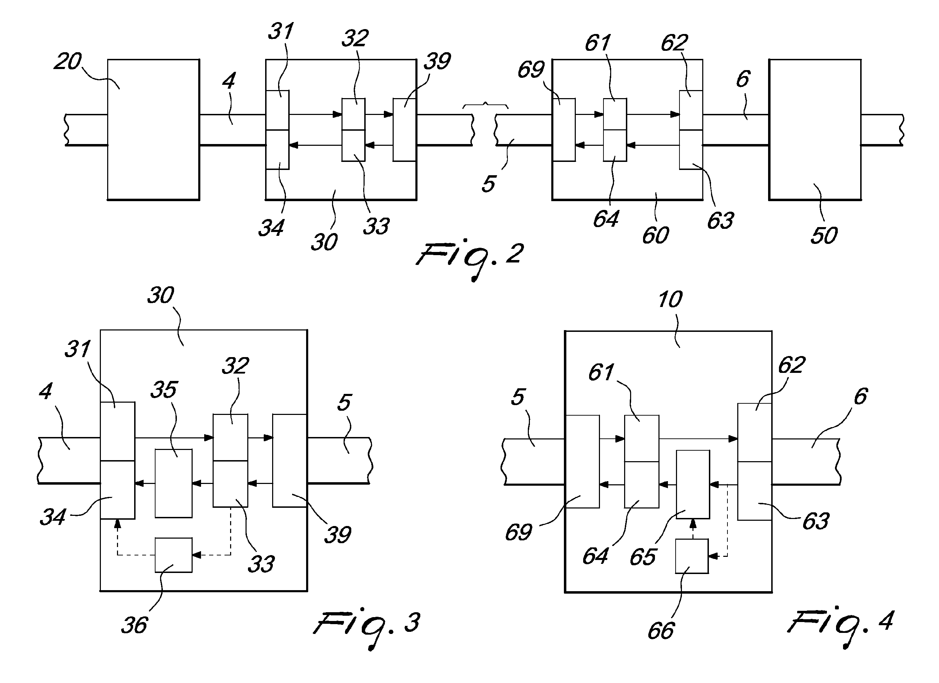

The local and remote control devices 30-60 are illustrated schematically in greater detail in Figure 2.

In particular, Figure 2 illustrates the network 5 of the IP type that connects the local control device 30 and the remote control device 60.

In the local control device, a schematic illustration is provided of means 31 for receiving a telephone call that originates from the external telephone network 1, is directed to the local exchange 20 and is forwarded by the exchange 20 over a line 4, means 32 for forwarding the call to the remote control device 60, means 33 for receiving commands sent by the remote control device 60, means 34 for sending to the local exchange 20 the received commands and a communications interface 39, for example an Ethernet interface, for communication over the IP network 5 that allows the control device 30 to communicate, i.e., exchange data and voices, over the IP network 5.

As regards the remote control device 60, it comprises means 61 for receiving the call forwarded by the device 30 and means 62 for forwarding such call to a remote exchange 50 over a connection line 6, means 63 for receiving from the remote exchange 50 commands issued by an operator 52, means 64 for forwarding these commands to the local control device, in addition to a communication interface 69, for example an Ethernet interface, which allows the remote device 60 to communicate, i.e., exchange data and voice, over the IP network 5.

Figures 3 and 4 illustrate respectively variations of the local control device 30 and of the remote control device 60, to be used depending on whether the exchange 20 is a PABX of the conventional type or is instead an IP PABX and depending on the method of provision, as will become better apparent hereinafter.

In the case of an IP PABX, it can be connected again to the classic PSTN, or the external network that provides telephone services can be, instead of the classic PSTN, a public IP network such as the Internet or a private network of a VoIP operator without detracting anything from the applicability of the present invention.

In particular, Figure 3 shows means 35 for extracting DTMF tones from IP packets and alternative or complementary means 36 used to convert tones into IP command messages, while Figure 4 illustrates means 65 for encapsulating DTMF tones in IP packets and alternative or complementary means 66 used to convert tones into IP command messages.

As is evident to the person skilled in the art, the devices 30 and 60 are understood to comprise, in addition to what has been described above, everything that is necessary for the normal handling of telephone calls, for example telephone interfaces provided with all the conventional means needed for handling incoming and outgoing calls, any protections, ring sensors, line current sensors, line engagement relays, rectifier bridges, active current stabilizers, audio decoupling devices, isolation transformers, active balanced interfaces, and audio processors comprising all the necessary conventional means, for example, where appropriate or necessary, means for detecting 425-Hz or DTMF tones and DTMF tone generators. The means mentioned above perform their known functions and therefore are not described in detail. Moreover, both control devices are provided with a CPU that runs software code capable of driving the actuators and sensors cited above, in order to allow for example to decode tones and to detect their patterns on the connected lines, to decode and generate DTMF digits, to detect call rings and the presence of current on the lines and to activate and read the state of the telephone line engagement relays. It will become clear from the description that follows when some of the means cited above are to be understood as replaced by technical equivalents, depending for example on the type of exchange 20 or 50 connected to the control devices.

Operation of the system is as follows. A caller 11 dials from his telephone set 10 the telephone number of the recipient of the call, thus engaging an external line 2 of the network 1 connected to the local exchange 20.

If the exchange 20 is operating in conventional mode, the call is handled by the local exchange operator 22, who works by using a local telephone 21 and, in traditional manner, can put the caller 11 in contact with the internal extension or desired station 40.

If instead the exchange 20 is set to use the system according to the present invention, the call is forwarded to the local control device 30 over the line 4 and is received by the local control device 30 by the call receiving means 31.

The call is decoded, identifying the recipient of the call. In particular, depending on the number dialed by the caller 11, an IP address that corresponds to the remote control device 60 is associated. The call is then forwarded by the means 32 over the IP communication interface 39 and the IP network 5 to the corresponding remote control device 60, located proximate to the remote exchange 50.

The remote control device 60 receives the call over the corresponding IP communication interface 69 and the receiving means 61 and, via the means 62, forwards it on the line 6 to the remote exchange 50, from which it is taken by an operator 52, who works on a conventional telephone set 51.

Of course, the telephone 51 can also be an IP telephone, so long as it is capable of sending DTMF tones.

The operator 52 has the task of answering the call, talking to the caller 11, placing a call to the required extension number within the group of users and forwarding the call to the extension of the desired group 40, and then, as soon as the call has been forwarded, disengaging the line in order to receive another call directed toward the exchange 20. At the same time, the operator 52 must also be able to perform all the other operations normally reserved to the local exchange operator 22.

To do this, the remote operator 52 answers the call, recognizes that call originates from a device 30, for example by means of suitable warning tones, and enters a preset "answer external caller" DTMF code. Moreover, the device 60 can send, in the form of suitable trains of pulses that comply with a communications protocol or IP messages which are then converted by the device 60 into the corresponding pulses or by means of an IP network connection between the control device 60 and conventional display means not shown in the figures, further information related to the call in progress. For example, it can send information that identifies the number dialed by the caller 11, so that the operator 52 can identify the exchange for which the call made by the caller 11 is intended and answer adequately. In this manner, it is possible to connect a plurality of exchanges 20, each via its own device 30, to a same call center or remote exchange 50, allowing a single operator 52 who works remotely to manage a plurality of offices or companies from a single workstation.

The commands issued by the operator 52 are generated by pressing the keys of the telephone set 51 on which he works, originating the transmission over the line 6 of corresponding DTMF tones in output to the exchange 50.

The DTMF tones are received in the remote control device 60 by the means 63, forwarded to the local control device 30, and finally used to control the exchange 20, which receives the data as if they had been sent directly by the local telephone set 21.

The exchanges 20 and 50 can be exchanges of a different type.

According to a first preferred embodiment, both the local exchange 20 and the remote exchange 50 are PABXs of the traditional type.

In this case, the DTMF tones that arrive from the exchange 50 to the remote control device 60 are encapsulated in IP packets by the means 65 and are forwarded by the means 64, via the IP interface 69 and the IP network 5, to the local control device 30, where they are received by the means 33, extracted from the packets and converted into analog criteria (or ISDN messages) by the means 35, to be then sent to the exchange 20 by the means 34.

In this configuration, the connection 4 between the local exchange 20 and the local control device 30 is constituted preferably by a plurality of analog lines, for example four in number, normally dedicated to the connection of conventional analog telephone sets, which are matched on the local device 30 by an FXO or ISDN User port. The remote exchange 50 in turn is interfaced with the remote control device 60 by means of one or more PRIs (Primary Rate Interface), the device 60 being provided consequently with a corresponding number of PRI ports and with an Ethernet port for communication over the IP network 5.

In the case described above in which the DTMF tones received by PRI are encapsulated and transported over the IP network 5 to the local control device 30, the remote control device 60 can be provided, in terms of functionalities required for the purposes of the invention, as an IP PABX with an IP trunk and a PRI trunk, or as an already known business PRI-IP CPE (Customer Premises Equipment)/CPG (Customer Premises Gateway) apparatus, while the protocol used for communication over the IP network 5 can be any protocol of a commercial type, for example the SIP protocol.

In a second embodiment, the remote control device 60 directly interprets the DTMF tones sent by the operator 52 and converts them into IP command messages. In this case, the device 60 uses the conversion means 66 shown in Figure 4.

In this case, the means 33 of the local control device perform the back-conversion of the IP command messages into analog criteria or ISDN messages, so as to be able to drive correctly the conventional local exchange 20.

In a further embodiment, the local exchange 20 is an IP PABX, which can be controlled by means of IP command messages. In this case, the operation of the system is the same, but the local control device 30 can be provided in turn with means 36 for converting the received DTMF tones into IP commands to be given to the IP exchange 20. If the conversion has already been performed by the remote control device 60 via the means 66, the local control device 30 performs no conversion and allows the received IP command messages to pass to the exchange 20 transparently, or converts them into the IP protocol of the local exchange 20 if such protocol is different.

The same operating description applies in a mirror-symmetrical manner if the remote exchange 50 is of the IP PABX type. In this case, the remote control device 60 can send the commands to the local control device 30 in the form of IP packets, as received by the remote exchange 50, or perform a conversion into IP command messages and then send them to the local control device 30. For all the cases described above, i.e., regardless of the type of exchange 20 and 50 used, once the operator 52 has entered the code that corresponds to call acceptance, the device 30, after recognizing the code forwarded by the remote device 60, performs the reply on the line 4 and connects the line 2 of the caller to the line 7 of the remote operator.

The remote operator 52, after greeting the caller 11 as if he were at the company, can then perform all the normal exchange operations, for example transfer the call to an extension 40 that is connected to the company exchange. To do this, he enters an additional preset "place on hold" DTMF code.

The device 30 recognizes the code entered by the remote operator 52 and places on hold the caller on the line 4 and offers the dial tone of the exchange to the remote operator 52.

Simultaneously, the user 11 who calls on the line 2-4 hears the holding sound or tone generated by the exchange 20. The criteria for placing on hold, flash, flash duration, numbering after flash and pause before numbering after flash criteria are programmable, as already known and as will be described in greater detail hereinafter by way of example.

The remote operator 52 then dials the number of the required extension 40, talks to the extension required by the caller and, if the call is accepted, enters a preset "connect and release" DTMF code.

The device 30 recognizes this code, which is forwarded by the remote device 60, and disengages itself from the call, releasing the entire system. The caller 11 is now connected to the person that he wished to contact.

If the attempt to contact the required extension 40 fails, for example because the extension is busy or the recipient is absent or does not wish to receive the call, the remote operator 52 can take back the caller who is on hold on the line 4. To do this, he enters a preset "resume from hold" DTMF code. The device 30 recognizes on the line 4 this command and takes back the call on hold. The criteria for resuming from hold, flash, flash duration, numbering after flash and pause before numbering after flash are also programmable.

At this point, the caller 11 again speaks with the remote operator 52 and can decide which action to take, such as calling again, trying again with the same extension or requesting another extension.

All the operations described above are protected by a general preset timeout, at the expiration of which the device 30 returns to stand by, releasing all the calls on the line 4. This timeout is tripped and is restarted at every operation performed by the remote operator 52 and is provided substantially for security reasons. Even in the case of incorrect operations by the remote operator 52, such as involuntary dropping of a line or lines without respective generation of the corresponding release tones, the timeout ensures that the device 30 is capable of returning to standby conditions, ready to handle other calls.

If the remote operator 52 needs to talk for a long time with the caller 11, he is warned by tones generated by the above cited tone generator, driven by the local control device 30, that the timeout is about to expire. To avoid termination of the call, the remote operator 52 must then enter the "take call" code, as a consequence of which the device 30 reloads the timeout.

The device 30 is furthermore capable of recognizing the signals of disengagement from the line 4, and if these signals are detected, returns to standby, ready to handle other calls.

It has thus been shown that the present device achieves the intended aim and objects. In particular, a device has been illustrated which is capable of providing remotely all the functionalities traditionally reserved to a local exchange and can be driven by any traditional telephone set, for example an analog or digital touch-tone set, but also by an IP telephone, in both cases utilizing a network of the IP type to delocalize the exchange, with evident advantages in terms of versatility and costs.

The IP network can obviously be public or private and can be used by the present invention both at a "low" level, i.e., as a support merely for IP transport, the system according to the present invention taking care, in this case in a fully autonomous manner, also of establishing the initial VoIP communication between the local control device and the remote control device, and at a "high" level, i.e., using VoIP managed services provided by VoIP service providers such as, for example and by way of non-limiting example, Skype or VoipStunt, thus utilizing their convenient characteristics of quality, price, availability, the system according to the present invention using, in this different case, such VoIP managed services to establish the initial VoIP call between the local control device and the remote control device and managing in a fully autonomous manner the other subsequent delocalized functions of the exchange operator.

Obviously, numerous modifications are evident and can be performed promptly by the person skilled in the art without abandoning the scope of the protection of the appended claims. For example, it is evident for the person skilled in the art to provide an additional decentralization of the operator 52, by transferring over a second IP network to a second remote control device the call forwarded by the local control device 30 to the remote control device 60, without this altering the inventive concept on which the present invention is based.

Therefore, the scope of the protection of the claims must not be limited by the illustrations or by the preferred embodiments shown in the description by way of example, but rather the claims must comprise all the characteristics of patentable novelty that can be deduced from the present invention, including all the characteristics that would be treated as equivalent by the person skilled in the art.

The disclosures in Italian Patent Application no. MI2007A001859, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for remote management of the operator workstation of a local telephone exchange (20) connected to an external network (1) that provides telephone services and to an internal extension (2), comprising the steps of:
on the part of said local telephone exchange (20), forwarding a telephone call received from said external network (1) to a local control device (30);
on the part of said local control device (30), forwarding said call to a remote control device (60);
on the part of said remote control device (60), forwarding said call to a remote exchange (50);
on the part of a touch-tone telephone set (51) connected to said remote exchange (50), answering said call;
on the part of said touch-tone telephone set (51), generating commands by means of tones;
on the part of said remote control device (60), forwarding said commands to said local control device (30);
on the part of said local control device (30), forwarding said commands to said local telephone exchange (20),
**characterized in that** the communication between said local control device (30) and said remote control device (60) occurs over an IP network.

2. The method according to claim 1, **characterized in that** said commands are transmitted by said remote control device (60) to said local control device (30) in the form of tones.

3. The method according to claim 1, **characterized in that** said commands are transmitted from said remote control device (60) to said local control device (30) in the form of IP command messages.

4. The method according to claim 2 or 3, **characterized in that** said local exchange (20) is an analog exchange.

5. The method according to claim 4, **characterized in that** the commands are forwarded from said local control device 30 to said local exchange (20) in the form of analog criteria.

6. The method according to claim 2 or 3, **characterized in that** said local exchange (20) is an IP exchange.

7. The method according to claim 6, **characterized in that** said commands are converted by said local control device (30) from tones to IP command messages and are transmitted to said local control exchange (30) in the form of IP command messages.

8. The method according to claim 6, **characterized in that** said commands are converted by said remote control device (60) from tones to IP command messages, which are transmitted to said local control device (30) in the form of IP command messages and are forwarded by said local control device (30) to said local exchange (20) in the form of IP command messages.

9. The method according to any one of the preceding claims, **characterized in that** said commands identify remote controlled operations selected from the group that comprises:
caller holding;
call parking;
number dialing;
accessing said external network;
resuming a held or parked call;
releasing said first and/or second call.

10. A system for remote management of the operator workstation of a local telephone exchange (20) connected to an external network (1) that provides telephone services and to an internal extension (2), comprising:
a) a local control device (30) provided with means (31) for receiving a telephone call that originates from said external network (1) and is directed to said local exchange (20), with means (32) for forwarding said call to a remote control device (60), with means (33) for receiving commands sent by said remote control device (60) and with means (34) for sending said commands to said local exchange (20);
b) a remote control device (60), provided with means (61) for receiving said call forwarded by said local control device (30), with means (62) for forwarding said call to a remote exchange (50), with means (63) for receiving from said remote exchange (50) commands issued by means of tones, and with means (64) for forwarding said commands to said local control device (30);
**characterized in that** said local control device (30) and said remote control device (60) are provided with means (39, 69) for mutual communication over an IP network (5).

11. The system according to claim 10, **characterized in that** said commands issued by said remote exchange (50) are DTMF tones and are transmitted by said remote control device (60) to said local control device (30) as tones.

12. The system according to claim 10, **characterized in that** said commands issued by said remote exchange (50) are DTMF tones and are transmitted by said remote control device (60) to said local control device (30) as IP command messages.

13. The system according to claim 11 or 12, **characterized in that** said local exchange (20) is an analog exchange.

14. The system according to claim 13**, characterized in that** said means (64) for forwarding said commands to said local control device (30) comprise means (65) for encapsulating said tones in IP packets and **in that** said means (33) for receiving said commands that arrive from said remote control device (60) comprise means (35) for extracting said tones from said IP packets and converting said tones into analog criteria.

15. The system according to claim 11 or 12, **characterized in that** said local exchange (20) is an IP exchange.

16. The system according to claim 15, **characterized in that** said means (64) for forwarding said commands to said local control device (30) comprise means (66) for converting said tones into IP command messages.

17. The system according to claim 15, **characterized in that** said means (33) for receiving commands from said remote control device (60) comprise means (36) for converting said tones into IP command messages.

18. The system according to any one of claims 10 to 17, **characterized in that** said commands identify remote-controlled operations selected from the group that comprises:
placing the caller on hold;
parking the call;
dialing a number;
accessing said external network;
resuming a held or parked call;
releasing said first and/or second call.
